# EUROPEAN PATENT SPECIFICATION

(11) **EP 2 874 353 B1**
(45) Date of publication and mention of the grant of the patent: **13.03.2019**
(21) Application number: 13832553.5
(22) Date of filing: 06.08.2013
(51) Int. Cl.: H04L 12/24, H04L 12/891

(54) **SERVICE PROTECTION METHOD AND SYSTEM FOR COMPOSITE LINK**
DIENSTSCHUTZVERFAHREN UND -SYSTEM FÜR EIN VERBUNDGLIED
PROCÉDÉ ET SYSTÈME POUR LA PROTECTION D'UN SERVICE EN RAPPORT AVEC UNE LIAISON COMPOSITE

(30) Priority: 31.08.2012 CN 201210318986
(43) Date of publication of application: 20.05.2015
(73) Proprietor: ZTE Corporation, Shenzhen, Guangdong 518057 (CN)
(72) Inventor: MA, Yuxia, Shenzhen Guangdong 518057 (CN); WANG, Linlin, Shenzhen Guangdong 518057 (CN)
(74) Representative: Cabinet Laurent & Charras
(86) International application number: PCT/CN2013/080931
(87) International publication number: WO 2014/032503

(56) References cited:
- EP-A1- 2 262 187
- WO-A1-2012/062101
- CN-A- 101 184 041
- CN-A- 101 207 508
- CN-A- 101 686 151
- US-A1- 2008 291 826
- US-A1- 2012 163 224
- G 808: "ITU-T G.808.1 (02/2010) - Generic protection switching - Linear trail and subnetwork protection", , 22 February 2010 (2010-02-22), XP055197221, Retrieved from the Internet: URL:https://www.itu.int/rec/dologin_pub.as p?lang=e&id=T-REC-G.808.1-201002-S!!PDF-E& type=items [retrieved on 2015-06-22]

## Description

### Technical Field

The present invention relates to the field of communication, and more particularly, to a service protection method and system for a composite link.

### Background of the Invention

Mobile backhaul network can be carried by technologies such as Ethernet, Synchronous Digital Hierarchy (referred to as SDH), Digital Subscriber Loop (referred to as DSL) and microwave. Especially in the current network, there are cases that all or some of the abovementioned technologies are used in the same mobile backhaul network. With the service bandwidth of the mobile backhaul network access increasing gradually, a single abovementioned link can not carry all the services, so that the requirement for binding a plurality of different types of links into a logical link is proposed, and this link is called a composite link in ITU-T G. 800. G.808.1 defines two protection methods for the composite link, respectively 1:1 CL_SNCG/I (Compound Link based SNC group protection with Inherit monitoring) and Adaptive CL-SNCG/I (adaptive compound link based SNC group protection with Inherit monitoring). When a member link in the composite link has signal failure or signal degradation, all the services carried by the member link will be switched to other member links. However, in practical applications, it does not need to switch all the services in some cases, for example, the member link does not have a real signal failure, only the services are congested; or the bandwidth of the member link becomes small (such as microwave link change, VC concatenation link adjustment, and so on), and at this time the member link still can carry services, but the service bandwidth distributed to this link exceeds the bandwidth of a member link, in this case, if all the services are switched to the other member links, not only the use of the original member link but also the bearer services which can operate normally on the member link will be affected, thereby decreasing the bandwidth efficiency of the member link.

The document US 2008291826A1 discloses that load balancing for layer-2 link aggregation involves initial assignment of link aggregation keys (LAGKs) and reassignment of LAGKs when a load imbalance condition that merits action is discovered. Load conditions change dynamically and for this reason load balancing tends to also be dynamic. Load balancing is preferably performed when it is necessary. Thus an imbalance condition that triggers load balancing is preferably limited to conditions such as when there is frame drop, loss of synchronization or physical link capacity exceed.

The document WO2012062101A1 discloses a method and an apparatus for controlling aggregated link warnings in a packet switching network, which include: when a fault occurs in an aggregated link, determining whether there are available bandwidth resources in the aggregated link; when there are available bandwidth resources in the aggregated link, switching the service flow borne on a member link in which the fault occurs to the available bandwidth resources, wherein the member link is in the aggregated link; when there are no available bandwidth resources in the aggregated link, or the switching fails, notifying a corresponding control node of the fault information of the service flow. The method enables flexible implementation of service flow protection in aggregated links, and improves efficiency of service protection.

### Summary of the Invention

The present invention comprises a service protection method for a composite link according to claim 1, and corresponding service protection system for a composite link according to claim 4.

### Brief Description of the Drawings

FIG. 1 is a structural diagram of a service protection system for a composite link in accordance with an embodiment;
FIG. 2 is a flow chart of a service protection method for a composite link in accordance with an embodiment;
FIG. 3 is a structural diagram of a service protection system for a composite link in an application example;
FIG. 4 is a flow chart of a service protection method for a composite link when a node which detects that the link changes is a node where the control unit is located in an application example;
FIG. 5 is a flow chart of a service protection method for a composite link when a node which detects that the link changes is not a node where the control unit is located in an application example.

### Preferred Embodiments of the Invention

Hereinafter in conjunction with the accompanying drawings, the embodiments of the present invention will be described in detail. It should be noted that, in the case of no conflict, the embodiments and features in the embodiments of the present application may be arbitrarily combined with each other.

### Embodiment:

The composite link is formed by integrating two or more links of same or different types, and the services are distributed to various member links according to the priorities or on average. When a certain member link does not have real signal failure, but the services are congested, or the bandwidth of a member link changes (such as microwave link change, VC concatenation link adjustment, and so on), some services need to be protected and redistributed, or when the bandwidth of a member link is recovered, the services also need to be redistributed.

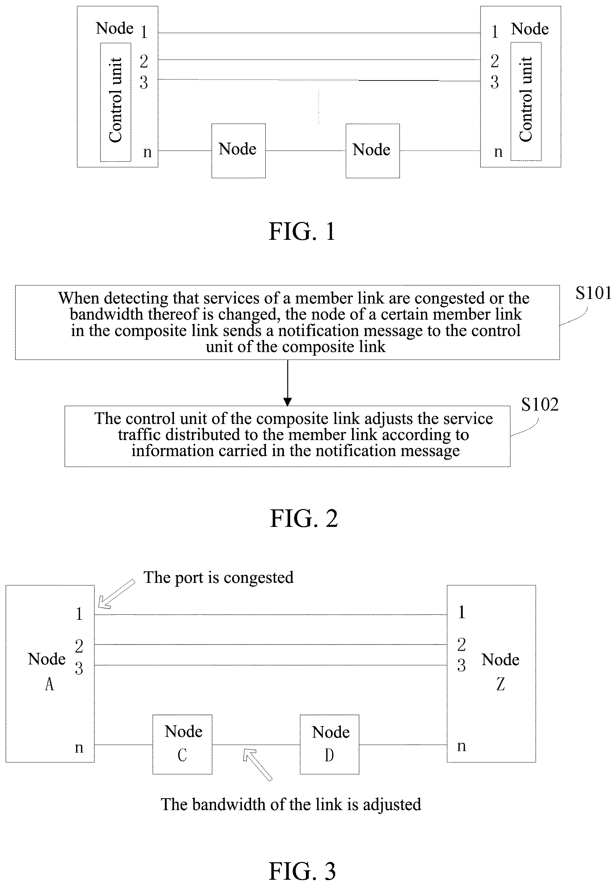

As shown in FIG. 1, the present embodiment provides a service protection system for a composite link, and the composite link comprises two or more member links, and the system comprises:
a node of each member link, which is configured to detect the link state of the member link, when detecting that the services of the member link are congested or the bandwidth thereof changes, send a notification message to a control unit of the composite link,
wherein, if the node of the member link is not a node whether the control unit of the composite link is located, an operation administration maintenance (OAM) message or an automatic protection switching (APS) message is used as the notification message and is sent to the control unit of the composite link;
the control unit on the first node of the composite link, which is configured to adjust the service traffic distributed to the member link according to the information carried in the notification message.

If the node detects that the services of the member link are congested, the information carried in the notification message at least comprises: link change type and congestion packet loss rate;
the control unit decreases the corresponding service traffic of the member link according to the congestion packet loss rate, and redistributes the decreased corresponding service traffic to other member links.

If the node detects that the bandwidth of the member link changes, the information carried in the notification message at least comprises: the link change type and the current actual bandwidth of the member link;
the control unit adjusts the service traffic distributed to the member link in the following way:
comparing the current actual bandwidth of the member link with actual bandwidth of the member link carried in the last notification message;
if the current actual bandwidth of the member link becomes small and is smaller than the amount of services which are currently carried, decreasing the corresponding service traffic of the member link according to a bandwidth decrease amount, and distributing the decreased corresponding service traffic to other member links;
if the current actual bandwidth of the member link becomes large, and a protection mode of the member link is configured as a return mode, increasing the corresponding service traffic of the member link according to a bandwidth increase amount, otherwise, not redistributing the service traffic to the member link.

The node of the member link is configured to send a notification message to the control unit of the composite link in the following way: in a period of time after detecting that the services of the member link are congested or the bandwidth thereof changes, periodically transmitting the notification message to the control unit of the composite link, until the member link is no longer congested or the bandwidth of the member link is stable, or until that the services of the member link are congested or the bandwidth thereof changes is detected again;
the control unit on the first node of the composite link is configured to: every time the notification message is received, adjust the service traffic distributed to the member link according to the information carried in the notification message.

As shown in FIG. 2, the present embodiment provides a service protection method for a composite link, comprising the following steps:
In S101, when detecting that services of a member link in a composite link are congested or the bandwidth thereof changes, the node of a certain member link in the composite link sends a notification message to the control unit of the composite link;
wherein the content of the notification message may comprise: link type change such as service congestion or link bandwidth change, congestion packet loss rate, current actual bandwidth of the link member, position of the node, notification message sending period, and so on.

If the node of a certain member link in the composite link is not a node where the control unit of the composite link is located (that is, not the first node), the notification message is an operation administration maintenance (OAM) message or an automatic protection switching (APS) message.

In S102, the control unit of the composite link adjusts the service traffic distributed to the member link according to information carried in the notification message.

If the node detects that the services of the member link are congested, the control unit of the composite link decreases the corresponding service traffic of the member link according to the congestion packet loss rate, and re-distributes the corresponding service traffic to other member links.

If the node detects that the bandwidth of the member link changes, the control unit of the member link compares the current actual bandwidth of the composite link with the actual bandwidth of the member link carried in the last notification message;
if the current actual bandwidth of the member link becomes small and is smaller than the amount of services which are currently carried, the corresponding service traffic of the member link is decreased according to the bandwidth decrease amount, and the decreased corresponding service traffic is distributed to other member links;
if the current actual bandwidth of the member link becomes large, and a protection mode of the member link is configured as a return mode, the corresponding service traffic of the member link is increased according to the bandwidth increase amount, otherwise, the service traffic is not redistributed to the member link.

In the abovementioned step, in a period of time after the node of a certain member link in the composite link detects that the services of the member link are congested or the bandwidth thereof changes, the node of the certain member link in the composite link periodically transmits the notification message to the control unit of the composite link, until the member link is no longer congested or the bandwidth of the member link is stable, or until that the services of the member link are congested or the bandwidth thereof changes is detected again;
every time the control unit of the composite link receives the notification message, the control unit of the composite link adjusts the service traffic distributed to the member link according to the information carried in the notification message, if the control unit does not receive a new notification message any more or the content of the notification message does not change, the control unit does not perform a new distribution.

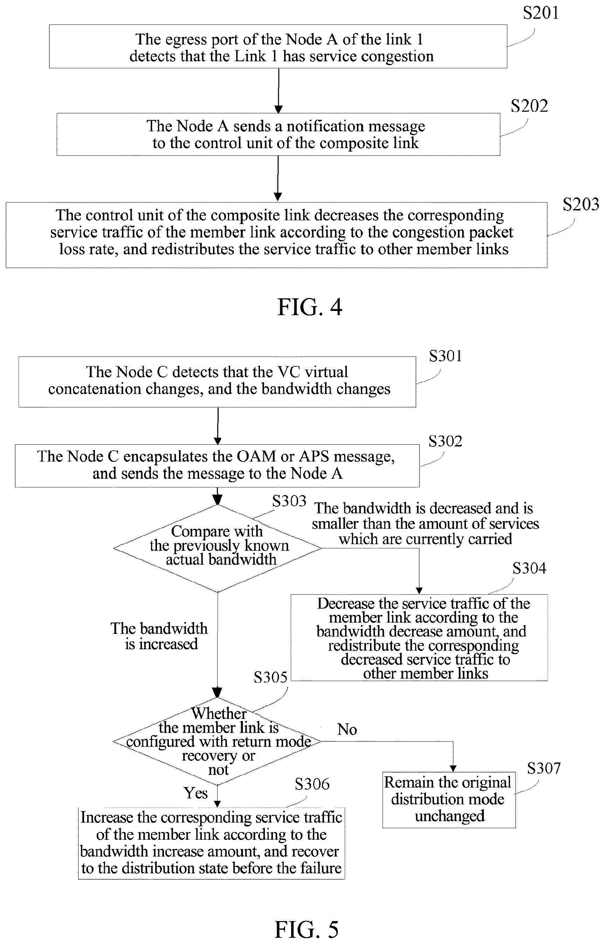

In an application example, as shown in FIG. 3, there are n member links between the Node A and the Node Z, and they can be directly-connected physical links, logical links, or physical or logical links which pass through other nodes though, but where there is no exchange among intermediate nodes, and the services are transparently transmitted, and the n links form a composite link. In the present application example, the member link 1 is an Ethernet link, and the member link n is an SDH link, and there is a virtual concatenation of a plurality of VCs between the Node C and the Node D. For convenience of explanation, the uni-direction from the Node A to the Node Z is taken as an example, the services are normally distributed to the n links to be transmitted, wherein the Node A is the first node. As shown in FIG. 4, the node detecting the link change is the Node A where the control unit is located, the process of the service protection method for the composite link is as follows:
In S201, the egress port of the Node A of the link 1 detects that the Link 1 has service congestion;
In S202, the Node A sends a notification message to the control unit of the composite link;
since the congestion occurs in the node A where the control unit of the composite link is located, it is to directly notify the Node A of the detection result, that is, traffic congestion, congestion packet loss rate, and so on.

In S203, the control unit of the composite link decreases the corresponding service traffic of the member link according to the congestion packet loss rate, and redistributes the service traffic to other member links, thereby protecting against the packet loss due to the congestion.

As shown in FIG. 5, a certain VC between the Node C and the Node D fails, the VC virtual concatenation is adjusted, the bandwidth thereof is decreased, and the node which detects that the link changes is not the Node A where the control unit is located, but the Node C, and the process of the service protection method for a composite link is as follows:
in S301, the Node C detects that the VC virtual concatenation changes, and the bandwidth changes;
in S302, the Node C encapsulates the OAM or APS message, and sends the message to the Node A, the content of the message comprises: bandwidth change, the current actual bandwidth of the member link n;
in S303, after the Node A receives the message, it compares the current actual bandwidth of the member link n with the previously known actual bandwidth (the actual bandwidth of the member link in the last notification message stored by the control unit), if the bandwidth is found decreased, and the current actual bandwidth of the member link n is smaller than the amount of services which are currently carried, it is to proceed to step S304; if the failed VC between the Node C and the Node D is recovered, the VC virtual concatenation is adjusted, and the bandwidth is increased, it is to proceed to step S305;
in S304, it is to decrease the service traffic of the member link based on the bandwidth decrease amount, and to redistribute the corresponding decreased service traffic to other member links, thereby protecting against the package loss due to the bandwidth decrease, meanwhile, it is to update the actual bandwidth of the stored member link to the current actual bandwidth carried in the notification message;
in S305, it is to judge whether the member link is configured with return mode recovery or not, if it is configured with return mode recovery, it is to proceed to step S306; if it is configured as a non-return mode, it is to proceed to step S307;
in S306, it is to increase the corresponding service traffic of the member link according to the bandwidth increase amount, and to recover to the distribution state before the failure;
in S307, if it is configured as the non-return mode, even if the bandwidth is increased, it is not to redistribute the services, and to remain the original distribution mode unchanged.

From the abovementioned embodiments, it can be seen that, compared to the related art, when the services of a certain member link are congested or the bandwidth of the member link becomes small, with the service protection method and system for a composite link provided in the abovementioned embodiment, it is no longer to switch all services of the member link to other links, but protect and redistribute some of services, so as to be able to continue to use the original member link, which not only protects the affected part of services, but also effectively uses the bandwidth of the member link, in addition, when the bandwidth of a certain member link is recovered, the service distribution can also be recovered.

Those ordinarily skilled in the art can understand that all or some of steps of the abovementioned method may be completed by the programs instructing the relevant hardware, and the programs may be stored in a computer-readable storage medium, such as read only memory, magnetic or optical disk. Alternatively, all or some of the steps of the abovementioned embodiments may also be implemented by using one or more integrated circuits. Accordingly, each module/unit in the abovementioned embodiments may be realized in a form of hardware, or in a form of software function modules. The present invention is not limited to any specific form of hardware and software combinations.

The above description is only for preferred embodiments of the present invention and not intended to limit the protection scope of the present invention. According to the contents of the present invention, there may also have a variety of other embodiments, and a person skilled in the art can make various appropriate changes and modifications according to the present invention. The scope of the present invention is defined by the claims.

### Industrial Applicability

Compared with the related art, in the present invention, it is no longer required to switch all the services of the member link to other links but protect and redistribute some of the services when the services of the member link are congested or the bandwidth of the member link becomes small, so as to be able to continue to use the original member link, which not only protects the affected part of services, but also effectively uses the bandwidth of the member link, in addition, when the bandwidth of a certain member link is recovered, the service distribution can also be recovered.

## Claims

1. A service protection method for a composite link, **characterized in that** it comprises:
a node of a member link in a composite link sending a notification message to a control unit of the composite link when detecting that services of the member link are congested or bandwidth thereof changes (S101); and
the control unit of the composite link adjusting service traffic distributed to the member link according to information carried in the notification message (S102);
wherein,
if the node detects that the services of the member link are congested, the information carried in the notification message at least comprises: link change type and congestion packet loss rate;
the step of the control unit of the composite link adjusting the service traffic distributed to the member link according to the information carried in the notification message comprises:
the control unit of the composite link decreasing the service traffic of the member link according to the congestion packet loss rate, and redistributing the decreased service traffic to other member links (S203);
if the node detects that the bandwidth of the member link changes, then the information carried in the notification message at least comprises: link change type and current actual bandwidth of the member link;
the step of the control unit of the composite link adjusting the service traffic distributed to the member link according to the information carried in the notification message comprises:
the control unit of the composite link comparing the current actual bandwidth of the member link with actual bandwidth of the member link carried in a last notification message;
if the current actual bandwidth of the member link is smaller than the actual bandwidth of the member link in the last notification message, and is smaller than an amount of services which are currently carried, decreasing the service traffic of the member link according to a bandwidth decrease amount, and distributing the decreased service traffic to other member links (S304);
if the current actual bandwidth of the member link is larger than the actual bandwidth of the member link in the last notification message, and a protection mode of the member link is configured as a return mode, increasing the service traffic of the member link according to a bandwidth increase amount, if the protection mode of the member link is configured as a non-return mode, not adjusting the service traffic distributed to the member link (S306).

2. The method of claim 1, wherein
if the node of the member link is not a node where the control unit of the composite link is located, the notification message is an operation administration maintenance (OAM) message or an automatic protection switching (APS) message.

3. The method of claim 1, wherein in the step of the node of the member link sending the notification message to the control unit of the composite link,
in a period of time after detecting that the services of the member link are congested or the bandwidth thereof changes, the node of the member link periodically transmits the notification message to the control unit of the composite link, until the member link is no longer congested or the bandwidth of the member link is stable, or until that the services of the member link are congested or the bandwidth thereof changes is detected again; and
in the step of the control unit of the composite link adjusting the service traffic distributed to the member link,
every time the control unit of the composite link receives the notification message, the control unit of the composite link adjusts the service traffic distributed to the member link according to the information carried in the notification message.

4. A service protection system for a composite link, wherein the composite link comprises two or more member links, **characterized in that** the system comprises:
a node of each member link, configured to detect a link state of the member link, and send a notification message to a control unit on a first node of the composite link when detecting that services of the member link are congested or bandwidth thereof changes; and
the control unit on the first node of the composite link, which is configured to adjust service traffic distributed to the member link according to information carried in the notification message;
wherein,
if the node detects that the services of the member link are congested, the information carried in the notification message at least comprises: link change type and congestion packet loss rate;
the control unit on the first node of the composite link is configured to adjust the service traffic distributed to the member link by means of:
decreasing the service traffic of the member link according to the congestion packet loss rate, and redistributing the decreased service traffic to other member links;
if the node detects that the bandwidth of the member link changes, the information carried in the notification message at least comprises: link change type and current actual bandwidth of the member link;
the control unit on the first node of the composite link is configured to adjust the service traffic distributed to the member link by means of:
comparing the current actual bandwidth of the member link with actual bandwidth of the member link carried in a last notification message;
if the current actual bandwidth of the member link is smaller than the actual bandwidth of the member link in the last notification message, and is smaller than an amount of services which are currently carried, decreasing the service traffic of the member link according to a bandwidth decrease amount, and distributing the decreased service traffic to other member links;
if the current actual bandwidth of the member link is larger than the actual bandwidth of the member link in the last notification message, and a protection mode of the member link is configured as a return mode, increasing the service traffic of the member link according to a bandwidth increase amount, and if the protection mode of the member link is configured as a non-return mode, not adjusting the service traffic distributed to the member link.

5. The system of claim 4, wherein
if the node of the member link is not a node whether the control unit of the composite link is located, the notification message is an operation administration maintenance (OAM) message or an automatic protection switching (APS) message.

6. The system of claim 4, wherein
the node of the member link is configured to send a notification message to the control unit on the first node of the composite link by means of: in a period of time after detecting that the services of the member link are congested or the bandwidth thereof changes, periodically transmitting the notification message to the control unit of the composite link, until the member link is no longer congested or the bandwidth of the member link is stable, or until that the services of the member link are congested or the bandwidth thereof changes is detected again;
the control unit on the first node of the composite link is configured to: every time the notification message is received, adjust the service traffic distributed to the member link according to the information carried in the notification message.

## Patentansprüche

1. Ein Dienstschutzverfahren für ein Verbundglied, **dadurch gekennzeichnet, dass** es umfasst:
ein Knoten eines Mitgliedsglieds sendet eine Benachrichtigungsmeldung an eine Steuereinheit des Verbundglieds, bei Erkennung einer Dienstüberlastung des Mitgliedsglieds oder Änderung seiner Bandbreite (S101); und
die Steuereinheit des Verbundglieds passt den Dienstverkehr, der an das Mitgliedsglied verteilt wird, entsprechend den von den Benachrichtigungsmeldungen übertragenen Informationen an (S102);
wobei,
wenn der Knoten erkennt, dass die Dienste des Mitgliedsglieds überlastet sind, enthalten die von den Benachrichtigungsmeldungen übertragenen Informationen zumindest: Gliedänderungstyp und Überlastungspaketverlustrate;
der Schritt, in dem die Steuereinheit des Verbundglieds den an das Mitgliedsglied verteilten Dienstverkehr entsprechend den von der Benachrichtigungsmeldung übertragenen Informationen anpasst, umfasst:
die Steuereinheit des Verbundglieds setzt den Dienstverkehr des Mitgliedsglieds entsprechend der Überlastungspaketverlustrate herab und verteilt den herabgesetzten Dienstverkehr an andere Mitgliedsglieder (S203);
erkennt der Knoten eine Veränderung der Bandbreite der Mitgliedsglieds, dann enthalten die von den Benachrichtigungsmeldungen übertragenen Informationen zumindest: Gliedänderungstyp und laufende aktuelle Bandbreite des Mitgliedsglieds;
der Schritt, in dem die Steuereinheit des Verbundglieds den an das Mitgliedsglied verteilten Dienstverkehr entsprechend den von der Benachrichtigungsmeldung übertragenen Informationen anpasst, umfasst:
die Steuereinheit des Verbundglieds vergleicht die laufende aktuelle Bandbreite des Mitgliedsglieds mit der aktuellen Bandbreite des in einer letzten Benachrichtigungsmeldung übertragenen Mitgliedsglieds.
wenn die laufende aktuelle Bandbreite des Mitgliedsglieds geringer ist als die aktuelle Bandbreite des Mitgliedsglieds in der letzten Benachrichtigungsmeldung, und niedriger ist als eine Anzahl Dienste, die laufend übertragen werden, wird der Dienstverkehr des Mitgliedsglieds entsprechend dem Umfang des Bandbreitenrückgangs herabgesetzt und der verringerte Dienstverkehr an andere Mitgliedsglieder verteilt (S304);
wenn die laufende aktuelle Bandbreite des Mitgliedsglieds breiter ist als die aktuelle Bandbreite des Mitgliedsglieds in der letzten Benachrichtigungsmeldung, und wenn ein Schutzmodus des Mitgliedsglieds als Return-Modus konfiguriert ist, wird der Dienstverkehr des Mitgliedsglieds entsprechend dem Umfang der Bandbreitenzunahme heraufgesetzt, wenn der Schutzmodus des Mitgliedsglieds nicht als Return-Modus konfiguriert ist, erfolgt keine Anpassung des Dienstverkehrs an das Mitgliedsglied (S306);

2. Verfahren nach Anspruch 1, wobei
wenn der Knoten des Mitgliedsglieds kein Knoten ist, an dem die Steuereinheit des Verbundglieds lokalisiert ist, handelt es sich bei der Benachrichtigungsmeldung um eine Operation, Administration and Maintenance (OAM)-Meldung oder eine automatische Schutzumschaltungs (APS)-Meldung.

3. Verfahren nach Anspruch 1, wobei in dem Schritt, in dem der Knoten des Mitgliedsglieds die Benachrichtigungsmeldung an die Steuereinheit des Verbundglieds sendet,
in einer Zeitspanne nach der Erkennung, dass die Dienste des Mitgliedsglieds überlastet sind oder sich ihre Bandbreite ändert, der Knoten des Mitgliedsglieds regelmäßig die Benachrichtigungsmeldung an die Steuereinheit des Verbundglieds sendet, bis der Mitgliedsglied nicht mehr länger überlastet ist oder die Änderung der Bandbreite erneut erkannt wird; und
in dem Schritt, in dem die Steuereinheit des Verbundglieds den an das Mitgliedsglied verteilten Dienstverkehr anpasst,
passt, immer wenn die Steuereinheit des Verbundglieds die Benachrichtigungsmeldung erhält, die Steuereinheit des Verbundglieds den an das Mitgliedsglied verteilten Dienstverkehr entsprechend der in der Benachrichtigungsmeldung übertragenen Information an.

4. Ein Dienstschutzsystem für ein Verbundglied, wobei der zusammengesetzte Link zwei oder mehr Mitgliedsglieder enthält, **dadurch gekennzeichnet, dass** das System enthält:
einen Knoten jedes Mitgliedsglieds, der zum Erkennen eines Gliedstatus des Mitgliedsglieds und zum Senden einer Benachrichtigungsmeldung an eine Steuereinheit an einem ersten Knoten des Verbundglieds, bei Erkennung einer Dienstüberlastung des Mitgliedsglieds oder Änderung seiner Bandbreite konfiguriert ist; und
die Steuereinheit an dem ersten Knoten des Verbundglieds, der konfiguriert ist, um den an das Mitgliedsglied verteilten Dienstverkehr entsprechend der in der Benachrichtigungsmeldung übertragenen Information anzupassen;
wobei,
wenn der Knoten erkennt, dass die Dienste des Mitgliedsglieds überlastet sind, die von den Benachrichtigungsmeldungen übertragenen Informationen zumindest enthalten: Gliedänderungstyp und Überlastungspaketverlustrate;
die Steuereinheit des ersten Knotens des Verbundglieds, die konfiguriert ist, um den an das Mitgliedsglied verteilten Dienstverkehr anzupassen, durch:
Herabsetzung des Mitgliedsgliedsdienstverkehrs entsprechend der Überlastungspaketverlustrate und Neuverteilung des verringerten Dienstverkehrs an andere Mitgliedsglieder;
wenn der Knoten erkennt, dass die Bandbreite des Mitgliedsglieds sich ändert, enthalten die von den Benachrichtigungsmeldungen übertragenen Informationen zumindest: Gliedänderungstyp und laufende aktuelle Bandbreite des Mitgliedsglieds;
die Steuereinheit des ersten Knotens des Verbundglieds, die konfiguriert ist, um den an das Mitgliedsglied verteilten Dienstverkehr anzupassen, durch:
Vergleich der laufenden aktuellen Bandbreite des Mitgliedsglieds mit der aktuellen Bandbreite des in einer letzten Benachrichtigungsmeldung übertragenen Mitgliedsglieds.
wenn die laufende aktuelle Bandbreite des Mitgliedsglieds geringer ist als die aktuelle Bandbreite des Mitgliedsglieds in der letzten Benachrichtigungsmeldung, und niedriger ist als eine Anzahl Dienste, die laufend übertragen werden, Herabsetzung des Dienstverkehrs des Mitgliedsglieds entsprechend dem Umfang des Bandbreitenrückgangs und Verteilung des herabgesetzten Dienstverkehrs an andere Mitgliedsglieder;
wenn die laufende aktuelle Bandbreite des Mitgliedsglieds breiter ist als die aktuelle Bandbreite des Mitgliedsglieds in der letzten Benachrichtigungsmeldung, und wenn ein Schutzmodus des Mitgliedsglieds als Return-Modus konfiguriert ist, Heraufsetzung des Dienstverkehrs des Mitgliedsglieds entsprechend dem Umfang der Bandbreitenzunahme, wenn der Schutzmodus des Mitgliedsglieds nicht als Return-Modus konfiguriert ist, keine Anpassung des Dienstverkehrs an das Mitgliedsglied;

5. System nach Anspruch 4,
wobei der Knoten des Mitgliedsglieds kein Knoten ist, in dem die Steuereinheit des Verbundglieds lokalisiert ist, handelt es sich bei der Benachrichtigungsmeldung um eine Operation, Administration and Maintenance (OAM)-Meldung oder eine automatische Schutzumschaltungs (APS)-Meldung.

6. System nach Anspruch 4,
wobei der Knoten des Mitgliedsglieds konfiguriert ist, um eine Benachrichtigungsmeldung an die Steuereinheit des ersten Knotens des Verbundglieds zu senden, indem: in einer Zeitspanne nach der Erkennung, dass die Dienste des Mitgliedsglieds überlastet sind, oder sich ihre Bandbreite ändert, regelmäßiges Senden der Benachrichtigungsmeldung an die Steuereinheit des Verbundglieds, bis der Mitgliedsglied nicht mehr länger überlastet ist oder die Änderung der Bandbreite erneut erkannt wird;
die Steuereinheit des ersten Knotens des Verbundglieds ist konfiguriert: um immer wenn die Steuereinheit des Verbundglieds die Benachrichtigungsmeldung erhält, den an das Mitgliedsglied verteilten Dienstverkehr entsprechend der in der Benachrichtigungsmeldung übertragenen Information des Verbundglieds anzupassen.

## Revendications

1. Méthode de protection de service pour une liaison composite, **caractérisé en ce qu'**il comprend :
un noeud d'une liaison membre dans un liaison composite envoyant un message de notification à une unité de commande de la liaison composite lors de la détection que des services de la liaison membre sont encombrés ou que sa bande passante change (S101) ; et
l'unité de commande de la liaison composite ajuste le trafic de service distribué à la liaison membre en fonction d'informations transportées dans le message de notification (S 102) ;
dans laquelle,
si le noeud détecte que les services de la liaison membre sont encombrés, les informations transportées dans le message de notification comprennent au moins : un type de changement de liaison et un taux de perte de paquets par encombrement ;
l'étape de l'unité de commande de la liaison composite ajustant le trafic de service distribué à la liaison membre en fonction des informations transportées dans le message de notification comprend :
l'unité de commande de la liaison composite diminuant le trafic de service de la liaison membre en fonction du taux de perte de paquets par encombrement, et redistribuant le trafic de service diminué aux autres liaisons membres (S203) ;
si le noeud détecte que la bande passante de la liaison membre change, alors les informations transportées dans le message de notification comprennent au moins : un type de changement de liaison et la bande passante réelle actuelle de la liaison membre ;
l'étape de l'unité de commande de la liaison composite ajustant le trafic de service distribué à la liaison membre en fonction des informations transportées dans le message de notification comprend :
l'unité de commande de la liaison composite comparant la bande passante réelle actuelle de la liaison membre avec la bande passante réelle de la liaison membre transportée dans un dernier message de notification ;
si la bande passante réelle actuelle de la liaison membre est inférieure à la bande passante réelle de la liaison membre dans le dernier message de notification, et inférieure à une quantité de services actuellement transportés, la diminution du trafic de service de la liaison membre en fonction d'une quantité de diminution de bande, et la distribution du trafic de service diminué vers d'autres liaisons membres (S304) ;
si la bande passante réelle actuelle de la liaison membre est supérieure à la bande passante réelle de la liaison membre dans le dernier message de notification, et qu'un mode de protection de la liaison membre est configuré en mode retour, l'augmentation du trafic de service de la liaison membre en fonction d'une quantité d'augmentation de bande passante, si le mode de protection de la liaison membre est configuré en mode sans retour, sans ajustement du trafic de service distribué à la liaison membre (S306).

2. Méthode selon la revendication 1, dans laquelle
si le noeud de la liaison membre n'est pas un noeud où se trouve l'unité de commande de la liaison composite, le message de notification est un message de maintenance d'administration d'opération (OAM) ou un message de commutation de protection automatique (APS).

3. Méthode selon la revendication 1, dans laquelle dans l'étape du noeud de la liaison membre envoyant le message de notification à l'unité de commande de la liaison composite,
dans un laps de temps après avoir détecté que les services de la liaison membre sont encombrés ou que sa bande passante change, le noeud de la liaison membre envoie périodiquement le message de notification à l'unité de commande de la liaison composite, jusqu'à ce que la liaison membre ne soit plus encombrée ou que la bande passante de la liaison membre soit stable, ou jusqu'à ce que les services de la liaison membre soient encombrés ou que des changements de sa bande passante soient détectés à nouveau ; et
dans l'étape de l'unité de commande de la liaison composite ajustant le trafic de service distribué à la liaison membre,
à chaque fois que l'unité de commande de la liaison composite reçoit le message de notification, l'unité de commande de la liaison composite ajuste le trafic de service distribué à la liaison membre en fonction des informations transportées dans le message de notification.

4. Système de protection de service pour une liaison composite, dans lequel la liaison composite comprend deux liaisons membres ou plus, **caractérisé en ce que** le système comprend :
un noeud de chaque liaison membre, configuré pour détecter un état de liaison de la liaison membre, et envoyer un message de notification à une unité de commande sur un premier noeud de la liaison composite lors de la détection que des services de la liaison membre sont encombrés ou que sa bande passante change ; et
l'unité de commande sur le premier noeud de la liaison composite, qui est configurée pour ajuster le trafic de service distribué à la liaison membre en fonction d'informations transportées dans le message de notification ;
dans lequel,
si le noeud détecte que les services de la liaison membre sont encombrés, les informations transportées dans le message de notification comprennent au moins : un type de changement de liaison et un taux de perte de paquets par encombrement ;
l'unité de commande sur le premier noeud de la liaison composite est configurée pour ajuster le trafic de service distribué à la liaison membre en :
diminuant le trafic de service de la liaison membre en fonction du taux de perte de paquets par encombrement, et redistribuant le trafic de service diminué vers d'autres liaisons membres ;
si le noeud détecte que la bande passante de la liaison membre change, les informations transportées dans le message de notification comprennent au moins : un type de changement de liaison et une bande passante réelle actuelle de la liaison membre ;
l'unité de commande sur le premier noeud de la liaison composite est configurée pour ajuster le trafic de service distribué à la liaison membre en :
comparant la bande passante réelle actuelle de la liaison membre avec la bande passante réelle de la liaison membre transportée dans un dernier message de notification ;
si la bande passante réelle actuelle de la liaison membre est inférieure à la bande passante réelle de la liaison membre dans le dernier message de notification, et est inférieure à une quantité de services actuellement transportés, diminuant le trafic de service de la liaison membre en fonction d'une quantité de diminution de bande passante, et distribuant le trafic de service diminué vers d'autres liaisons membres ;
si la bande passante réelle actuelle de la liaison membre est supérieure à la bande passante réelle de la liaison membre dans le dernier message de notification, et un mode de protection de la liaison membre est configuré en mode retour, augmentant le trafic de service de la liaison membre en fonction d'une quantité d'augmentation de bande passante et, si le mode de protection de la liaison membre est configuré en mode sans retour, sans ajustement du trafic de service distribué à la liaison membre.

5. Système selon la revendication 4, dans lequel
si le noeud de la liaison membre n'est pas un noeud, que l'unité de commande de la liaison composite soit localisée ou non, le message de notification est un message de maintenance d'administration (OAM) ou un message de commutation de protection automatique (APS).

6. Système selon la revendication 4, dans lequel
le noeud de la liaison membre est configuré pour envoyer un message de notification à l'unité de commande située sur le premier noeud de la liaison composite en : dans un laps de temps après avoir détecté que les services de la liaison membre sont encombrés ou que sa bande passante change, transmettant périodiquement le message de notification à l'unité de commande de la liaison composite, jusqu'à ce que la liaison membre ne soit plus encombrée ou que la bande passante de la liaison membre soit stable, ou jusqu'à ce que les services de la liaison membre soient encombrés ou que des changements de sa bande soient détectés à nouveau ;
l'unité de commande sur le premier noeud de la liaison composite est configurée pour : chaque fois que le message de notification est reçu, ajuster le trafic de service distribué à la liaison membre en fonction des informations transportées dans le message de notification.
